# EUROPEAN PATENT APPLICATION

(11) **EP 4 068 051 A1**
(43) Date of publication of application: **05.10.2022**
(21) Application number: 20897144.0
(22) Date of filing: 02.12.2020
(51) Int. Cl.: G06F 3/01

(54) **DISPLAY CONTROL METHOD FOR 3D DISPLAY SCREEN, AND MULTI-VIEWPOINT 3D DISPLAY DEVICE**

(30) Priority: 05.12.2019 CN 201911231147
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133333
(87) International publication number: WO 2021/110039

(57) **Abstract**

The present application relates to the field of 3D images, and discloses a display control method for a multi-viewpoint 3D display screen, comprising: acquiring identity features of a user; and performing 3D display for the user when the identity features meet conditions. The method can conduct authentication about 3D display for the user, thereby solving a problem of a single 3D display mode, and improving flexibility of 3D display mode. The present application further discloses a multi-viewpoint 3D display device, a computer-readable storage medium, and a computer program product.

## Description

The present application claims priority to the Chinese Patent Application with an application number of 2019112311470 and a title of "Display Control Method for Naked-eye 3D Display Screen, and Multi-viewpoint Naked-eye 3D Display Device", filed to China National Intellectual Property Administration on December 5th, 2019, the disclosures of which are hereby incorporated by reference.

### TECHNICAL FIELD

The present disclosure relates to 3D display technologies, and for example, relates to a display control method for a 3D display screen, and a multi-viewpoint 3D display device.

### BACKGROUND

At present, when 3D display is performed, different users may see 3D display contents, thereby resulting in single 3D display mode and low flexibility.

### SUMMARY

In order to provide a basic understanding of some aspects of the disclosed embodiments, a brief summary of some embodiments is given below. The brief summary is not intended to identify key/important components or describe the scope of protection of the present invention, but to be a preface to the following detailed description.

Embodiments of the present disclosure provide a display control method for a 3D display screen, a multi-viewpoint 3D display device, a computer-readable storage medium, and a computer program product, which can avoid a problem of single 3D display mode, and improve flexibility of 3D display mode.

In some embodiments, a display control method for a multi-viewpoint 3D display screen is provided, comprising: acquiring identity features of a user; and performing 3D display for the user when the identity features meet conditions.

In some embodiments, the multi-viewpoint 3D display screen comprises a plurality of composite pixels; each composite pixel of the plurality of composite pixels comprises a plurality of composite subpixels; each composite subpixel of the plurality of composite subpixels comprises a plurality of subpixels corresponding to a plurality of viewpoints of the multi-viewpoint 3D display screen; performing 3D display for the user comprises: rendering subpixels corresponding to the viewpoints in the plurality of composite subpixels in the multi-viewpoint 3D display screen based on 3D signals according to viewpoints at which eyes of the user are located.

In some embodiments, the case that the identity features meet the conditions comprises: acquiring face image features of a user, and determining that the identity features meet the conditions when the face image features of the user are matched with authorized face image features; or acquiring the face image features and interpupillary distance features of the user, and determining that the identity features meet the conditions when the face image features of the user are matched with the authorized face image features and the interpupillary distance features of the user are matched with authorized interpupillary distance features; or acquiring the face image features of the user, and determining that the identity features meet the conditions when the face image features of the user are matched with the authorized face image features and the number of users whose face image features are matched with the authorized face image features meets preset numerical conditions; or acquiring the face image features and the interpupillary distance features of the user, and determining that the identity features meet the conditions when the face image features of the user are matched with the authorized face image features, the interpupillary distance features of the user are matched with the authorized interpupillary distance features, and the number of users whose face image features are matched with the authorized face image features and whose interpupillary distance features are matched with the authorized interpupillary distance features meets the preset numerical conditions.

In some embodiments, the face image features of the user are matched with the authorized face image features comprises: acquiring played 3D images; acquiring the authorized face image features according to the 3D images; comparing the face image features of the user with the authorized face image features; and determining that the face image features of the user are matched with the authorized face image features when a comparison result is that the face image features of the user are consistent with the authorized face image features.

In some embodiments, the display control method further comprises: stopping performing 3D display for the user when the identity features do not meet the conditions.

In some embodiments, the display control method further comprises: collecting a face image of the user; acquiring viewpoints at which eyes of the user are located based on the face image; and performing 3D display based on the viewpoints.

In some embodiments, the display control method further comprises: acquiring positions of the eyes of the user in a face when the identity features meet the conditions, and acquiring viewpoints at which the eyes of the user are located according to a face image position of the user and positions of the eyes in the face; or acquiring a correspondence between both eyes of the user and the viewpoints when the identity features meet the conditions, and acquiring, according to a viewpoint at which one of both eyes of the user is located and a correspondence between the both eyes and the viewpoints, a viewpoint at which the other of both eyes of the user is located.

In some embodiments, the display control method further comprises: acquiring eye positioning data of the user when the identity features meet the conditions; and acquiring the viewpoints at which the eyes of the user are located based on the eye positioning data.

In some embodiments, a multi-viewpoint 3D display device is provided, comprising: a multi-viewpoint 3D display screen; a 3D processing apparatus, configured to acquire identity features of a user, and trigger the multi-viewpoint 3D display screen to perform display 3D for the user when the identity features meet conditions.

In some embodiments, the multi-viewpoint 3D display screen comprises a plurality of composite pixels; each composite pixel of the plurality of composite pixels comprises a plurality of composite subpixels; each composite subpixel of the plurality of composite subpixels comprises a plurality of subpixels corresponding to a plurality of viewpoints of the multi-viewpoint 3D display screen; the 3D processing apparatus is configured to render subpixels corresponding to the viewpoints in the plurality of composite subpixels in the multi-viewpoint 3D display screen based on 3D signals, according to viewpoints at which eyes of a user are located.

In some embodiments, the 3D processing apparatus is configured to: acquire face image features of a user, and determine that the identity features meet the conditions when the face image features of the user are matched with authorized face image features; or acquire the face image features and interpupillary distance features of user, and determine that the identity features meet the conditions when the face image features of the user are matched with the authorized face image features, and the interpupillary distance features of the user are matched with authorized interpupillary distance features; or acquire the face image features of users, and determine that the identity features meet the conditions when the face image features of user are matched with the authorized face image features, and the number of users whose face image features are matched with the authorized face image features meets preset numerical conditions; or acquire the face image features and the interpupillary distance features of the user, and determine that the identity features meet the conditions when the face image features of user are matched with the authorized face image features, the interpupillary distance features of the user are matched with the authorized interpupillary distance features, and the number of users whose face image features are matched with the authorized face image features and whose interpupillary distance features are matched with the authorized interpupillary distance features meets the preset numerical conditions.

In some embodiments, the 3D processing apparatus is configured to acquire played 3D images, acquire the authorized face image features according to the 3D images, compare the face image features of the user with the authorized face image features, and determine that the face image features of the user are matched with the authorized face image features when a comparison result is that the face image features of the user are consistent with the authorized face image features.

In some embodiments, the 3D processing apparatus is configured to control the multi-viewpoint 3D display screen to stop displaying viewpoint images corresponding to viewpoints at which the eyes are located, according to the viewpoints at which the eyes are located, when the identity features do not meet the conditions.

In some embodiments, the multi-viewpoint 3D display device further comprises: an image collection apparatus, configured to collect a face image of the user; the 3D processing apparatus is configured to acquire viewpoints at which eyes of the user are located based on the face image, and trigger the multi-viewpoint 3D display screen to perform 3D display for the user based on the viewpoints.

In some embodiments, the 3D processing apparatus is configured to: acquire positions of the eyes of the user in a face when the identity features meet the conditions, and acquire viewpoints, at which the eyes of the user are located, according to a face image position of the user and positions of the eyes in the face; or acquire a correspondence between both eyes of the user and the viewpoints when the identity features meet the conditions, and acquire, according to a viewpoint at which one of both eyes of the user is located and the correspondence between the both eyes and the viewpoints, a viewpoint at which the other of both eyes of the user is located.

In some embodiments, the multi-viewpoint 3D display device further comprises: an eye positioning apparatus, configured to acquire eye positioning data of the user when the identity features meet the conditions; and the 3D processing apparatus is configured to acquire the viewpoints at which the eyes of the user are located based on the eye positioning data.

In some embodiments, a multi-viewpoint 3D display device is provided, comprising: a processor, and a memory storing program instructions; the processor is configured to execute the above method when executing the program instructions.

The computer-readable storage medium provided by the embodiments of the present disclosure stores computer-executable instructions; and the computer-executable instructions are configured to execute the above display control method.

The computer program product provided by the embodiments of the present disclosure comprises computer programs stored on the computer-readable storage medium; the computer programs comprise program instructions; and when the program instructions are executed by a computer, the computer executes the above display control method.

The multi-viewpoint 3D display control technology in the present disclosure can conduct user authentication about 3D display, thereby solving a problem of a single 3D display mode, and improving flexibility of 3D display mode.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Figs. 1A to 1C are structural schematic diagrams of a multi-viewpoint 3D display device according to embodiments of the present disclosure;
Figs. 2A to 2E are schematic diagrams of method flows of a multi-viewpoint 3D display control method according to embodiments of the present disclosure;
Fig. 3 is a structural schematic diagram of a multi-viewpoint 3D display device according to an embodiment of the present disclosure;
Figs. 4A to 4C are schematic diagrams of composite pixels according to embodiments of the present disclosure;
Figs. 5A to 5E are schematic diagrams of formats and contents of images contained in video frames of 3D video signals according to embodiments of the present disclosure;
Fig. 6 is a schematic diagram of arranging at least two 3D processing apparatuses provided by an embodiment of the present disclosure;
Fig. 7 is a schematic diagram of a system architecture according to an embodiment of the present disclosure;
Fig. 8 is a schematic diagram of a computer structure according to an embodiment of the present disclosure; and
Fig. 9 is a schematic diagram of a unit interaction process in a multi-viewpoint 3D display system according to an embodiment of the present disclosure.

### Reference numerals:

100: multi-viewpoint 3D display screen; 101: processor; 110: display panel; 120: grating; 122: register; 131: buffer; 130: 3D processing apparatus; 140: video signal interface; 150: eye positioning apparatus; 151: eye positioning data interface; 200: payment terminal; 300: server; 400: composite pixel; 410, 420, 430: composite subpixels; 441, 451, 461: subpixels; 470, 480, 490: composite subpixels; 471, 481, 491: subpixels; 500: multi-viewpoint 3D display device; 501, 502: two images contained in video frames; 503, 504: two images contained in video frames; 505: composite image contained in video frames; 506: composite image contained in video frames; 507: composite image contained in video frames; 510: image collection apparatus; 520: 3D processing apparatus; 530: eye positioning device; 600: exemplary system architecture; 601, 602, 603: terminal devices; 605: server; 800: computer system of 3D processing apparatus; 801: central processing unit (CPU); 802: read only memory (ROM); 803: random access memory (RAM); 804: bus; 805: input/output (I/O) interface; 806: input part; 807: output part; 808: storage part; 809: communication part; 810: driver; 811: removable medium; and 1000: multi-viewpoint 3D display device.

### DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure

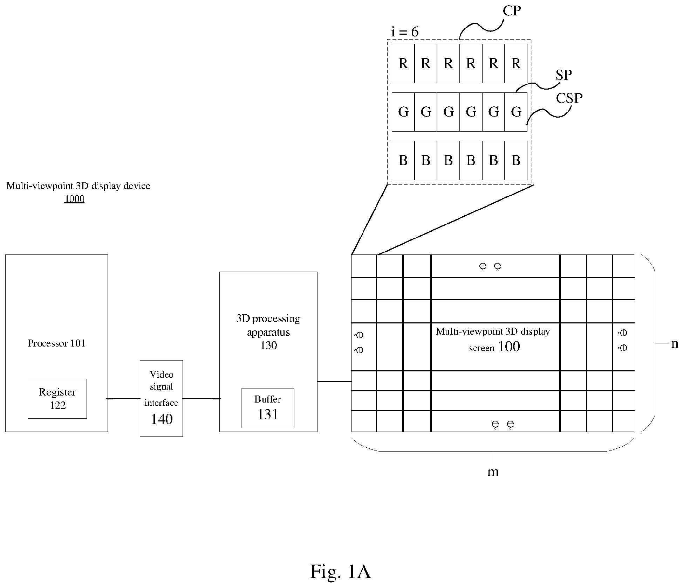

In some embodiments of the present disclosure, as shown in Figs. 1A to 1C, a multi-viewpoint 3D display screen 100 (e.g., a multi-viewpoint naked-eye 3D display screen) is provided, comprising a display panel 110 and gratings 120 arranged on the display panel 110, wherein m×n composite pixels CP are arranged on the display panel 110, thereby defining a display resolution of m×n; the composite pixels CP comprise a plurality of composite subpixels CSP; each composite subpixel CSP is composed of i homochromatic subpixels P corresponding to i viewpoints; and i>3. The multi-viewpoint 3D display screen 100 can generate an image corresponding to viewpoint information by rendering according to the viewpoint information, render a plurality of subpixels P in a composite pixel CP corresponding to the viewpoint information, and display an image corresponding to the viewpoint information in an overall viewing effect. For example, a left eye of the user is located at a viewpoint 3 and a right eye is at a viewpoint 6, correspondingly, subpixels corresponding to the viewpoint 3 in all the composite pixels CP in the multi-viewpoint 3D display screen 100 are rendered jointly corresponding to each pixel in a left-eye image, and subpixels corresponding to the viewpoint 6 are rendered jointly corresponding to each pixel in a right-eye image, so that the user can see a 3D display effect.

The gratings 120 in the multi-viewpoint 3D display screen 100 in the present application projects light of the subpixels P to different positions in space, so that eyes can see the light emitted by different subpixels P in the composite pixels CP at different spatial positions.

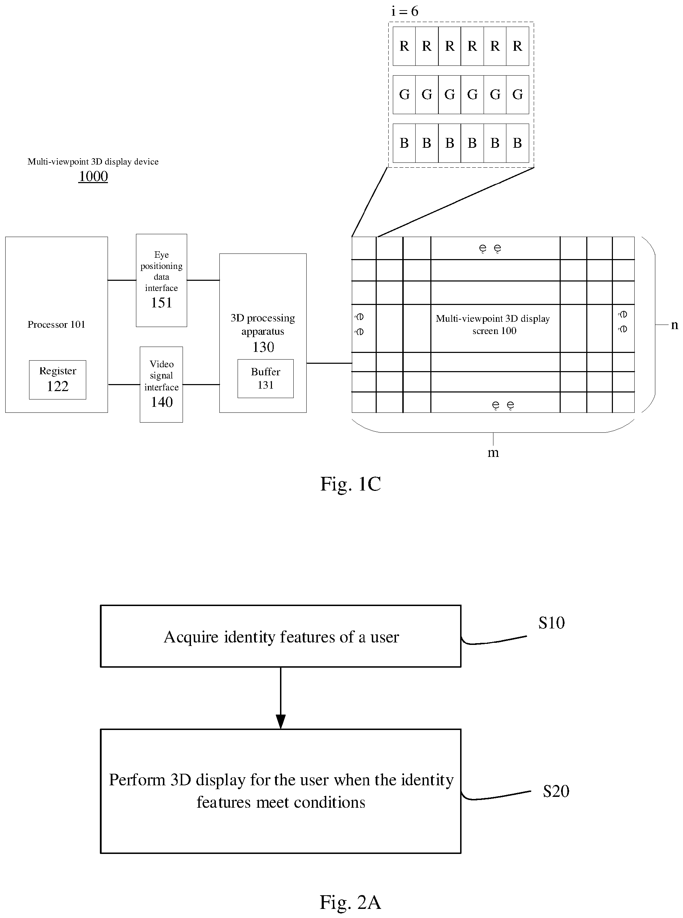

Some embodiments of the present disclosure provide a display control method for a multi-viewpoint 3D display screen, as shown in Fig. 2A, comprising:
S10, acquiring identity features of a user, wherein the identity features of the user comprise physical features capable of representing uniqueness of the user, such as face features, fingerprint features, and iris features, and also comprise artificially set ID numbers.

S20, performing 3D display for the user when the identity features meet conditions, wherein when the identity features meet the preset conditions, if the identity features belong to a preset authorized user identity feature set, a multi-viewpoint 3D display screen is controlled to perform 3D display; specifically, subpixels corresponding to viewpoint information in composite subpixels of the multi-viewpoint 3D display screen are rendered according to viewpoints at which eyes of the user are located and received 3D video signals, i.e., the subpixels in composite subpixels in the multi-viewpoint 3D display screen are dynamically rendered based on the 3D signals according to information of the viewpoints at which the eyes of the user are located.

Some embodiments of the present disclosure provide a multi-viewpoint 3D display control method, comprising the following steps:
controlling a 3D display screen to display viewpoint images corresponding to information of viewpoints at which the eyes are located according to the information of viewpoints at which the eyes of the user are located, when determining that the user meets conditions according to face image features.

The display control method in embodiments of the present disclosure can utilize an image identification technology, to determine whether the user belongs to the authorized user by identifying face features of the user, thereby performing display control, and when determining that the user belongs to the authorized user, acquire position information of the viewpoints at which the eyes of the authorized user are located and control subpixels P of the corresponding viewpoints to display, thereby controlling images corresponding to the viewpoints. For example, face image features of a user are collected, the face image features are matched with face image features of the authorized user stored or acquired in real time, and when the matching is qualified, the user is determined to be an authorized user, and then positions of the eyes are extracted from the face image features, to acquire the information of viewpoints at which the eyes are located, thereby controlling the multi-viewpoint 3D display screen 100 to display images according to the viewpoint information. In some embodiments of the present disclosure, spatial positions of the eyes may be directly extracted from the verified face image features, so as to acquire the information of viewpoints at which the eyes are located. The viewpoint information may also be acquired by other devices; generally, in order to reduce the amount of calculation or reduce the complexity of the devices, cameras may be directly adopted to collect face image of the user, which can be used for both matching of face image features and collection of viewpoint information. In some embodiments, initial viewpoint information collection can be performed in a common way at the beginning, and then a viewpoint positioning device can be used for viewpoint positioning. Certainly, when an identification rate of the device meets requirements, the same camera device or the same set of camera devices can also be used for viewpoint initial identification and viewpoint positioning.

The 3D display screen in embodiments of the present disclosure is a multi-viewpoint 3D display screen, which can provide 3D display images for a plurality of users, and can meet viewing requirements in cinemas.

It should be noted that the face image feature matching process may be performed by matching in a mode of neural network model; and the used neural network model may not only output matching results, but also output spatial positions of the eyes, which can be set by model training.

The multi-viewpoint 3D display control method in embodiments of the present disclosure can be applied to public cinemas, and at this time, arranging staffs to check tickets is unnecessary; or, the multi-viewpoint 3D display screen in the embodiments of the present disclosure can be arranged in a public place, without supervision, which may also achieve a purpose of watching only by authorized persons. According to the present disclosure, links of checking tickets, offering 3D glasses, and recycling the 3D glasses when watching movies can be reduced, to liberate the productivity. Through rapid face identification technology, ticket checking or watching authentication can be carried out rapidly, to increase operating efficiency, improve watching experience, and reduce queuing situations during ticket checking.

Certainly, the control method in the present disclosure can also be applied to home theaters. Through technologies in the present disclosure, watching privacy may be set, to only allow the authorized user to watch movies.

The multi-viewpoint 3D display control method in embodiments of the present disclosure further comprises: controlling the 3D display screen to stop displaying viewpoint images corresponding to information of viewpoints at which the eyes are located according to the information of viewpoints at which the eyes of the user are located, when determining that a user does not meet conditions. By controlling the corresponding viewpoint images to stop displaying through the real-time information of the viewpoints at which the eyes are located, it is ensured that an unauthorized user cannot watch, to avoid a situation that the unauthorized user occupies the viewpoints; since most of the information of the viewpoints at which the eyes of authorized user are located is dynamic, the viewpoint information needs to be adjusted dynamically, to display the images at dynamic viewpoint positions, eliminate viewpoints occupied by the unauthorized user in time, and provide more dynamic adjustment spaces for the authorized user.

The viewpoints of the multi-viewpoint 3D display screen 100 in embodiments of the present disclosure are often limited, and in public cinemas, are often set in an open space, such as a square and an entrance to a theater; the number of users is often random; in an unmanaged state, the number of users may exceed the number of viewpoints of the multi-viewpoint 3D display screen 100; therefore, generally, a theater will control the number of users; if a first-come user can watch without authentication, the final number of users will exceed the number of viewpoints, so that a subsequent authorized user cannot watch; therefore, viewpoint images of the unauthorized user are closed in time, to terminate the occupation to the viewpoints, so that the truly authorized user can watch, thereby ensuring the orderly progress of watching movies.

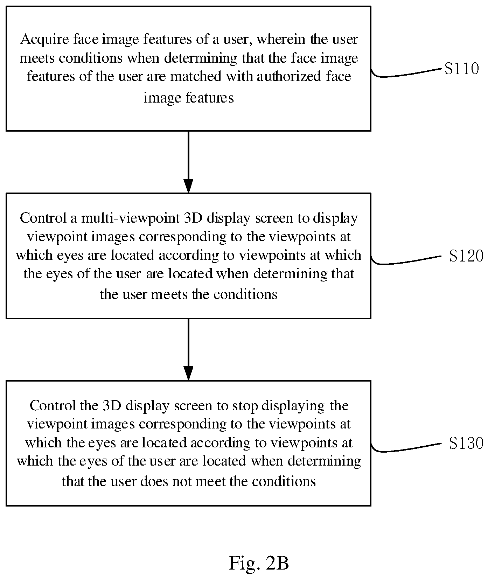

Determining whether the user meets preset conditions in embodiments of the present disclosure may be directly set by face identification, and may also be jointly set according to other conditions, thereby meeting authentication in different scenes; as shown in Fig. 2B, an embodiment of the present disclosure provides a multi-viewpoint 3D display control method, comprising the following steps:
S110, acquiring face image features of a user, wherein the user meets conditions when determining that the face image features of the user are matched with authorized face image features, and whether the face image features are authorized face image features is determined by the face image features;
S120, controlling the multi-viewpoint 3D display screen to display viewpoint images corresponding to the viewpoints at which the eyes are located according to viewpoints at which eyes of the user are located, when determining that the user meets the conditions, i.e., controlling subpixels corresponding to the viewpoints in rendered composite pixels to be lighted up; and
S130: controlling the 3D display screen to stop displaying the viewpoint images corresponding to the viewpoints at which the eyes are located according to viewpoints at which eyes of the user are located, when determining that the user does not meet the conditions.

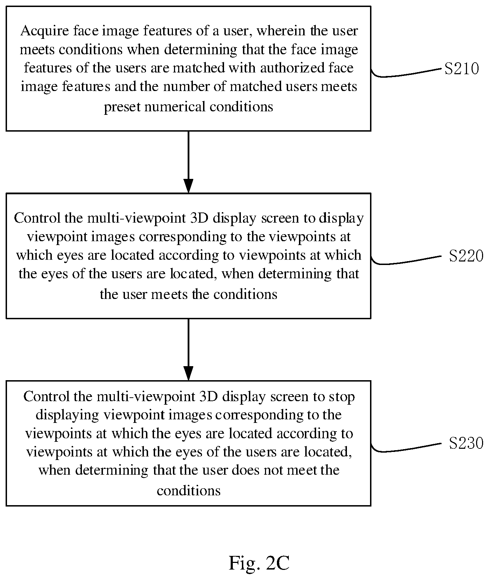

As shown in Fig. 2C, an embodiment of the present disclosure provides a multi-viewpoint 3D display control method, comprising the following steps:
S210, acquiring face image features of a user, wherein the user meets conditions when determining that the face image features of the user are matched with authorized face image features and the number of matched users meets preset numerical conditions; in the present embodiment, it is not only considered whether the user meets conditions of authorization, but also considered that the play is performed when the number of currently authorized users can reach a preset number, which can guarantee playing efficiency, and ensure that the number of people watching a movie at a time can reach the standard;
S220, controlling the multi-viewpoint 3D display screen to display viewpoint images corresponding to the viewpoints at which the eyes are located according to viewpoints at which eyes of the user are located, when determining that the user meets the conditions; and
S230, controlling the multi-viewpoint 3D display screen to stop displaying viewpoint images corresponding to the viewpoints at which the eyes are located according to viewpoints at which eyes of the user are located, when determining that the user does not meet the conditions.

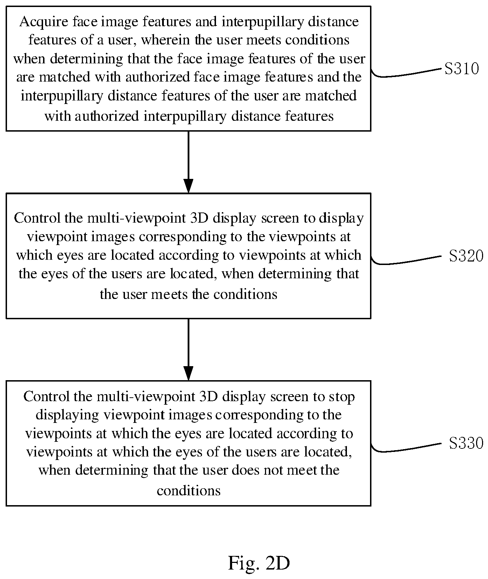

As shown in Fig. 2D, an embodiment of the present disclosure provides a multi-viewpoint 3D display control method, comprising the following steps:
S310, acquiring face image features and interpupillary distance features of a user, wherein the user meets conditions when determining that the face image features of the user are matched with authorized face image features and the interpupillary distance features of the user are matched with authorized interpupillary distance features; in an embodiment of the present disclosure, besides the face image features are verified, the interpupillary distance features, such as a distance between eyes, can further be verified, so that accuracy of matching results can be guaranteed;
S320, controlling the multi-viewpoint 3D display screen to display viewpoint images corresponding to the viewpoints at which the eyes are located according to viewpoints at which eyes of the user are located, when determining that the user meets the conditions; and
S330, controlling the multi-viewpoint 3D display screen to stop displaying viewpoint images corresponding to the viewpoints at which the eyes are located according to viewpoints at which eyes of the user are located, when determining that the user does not meet the conditions.

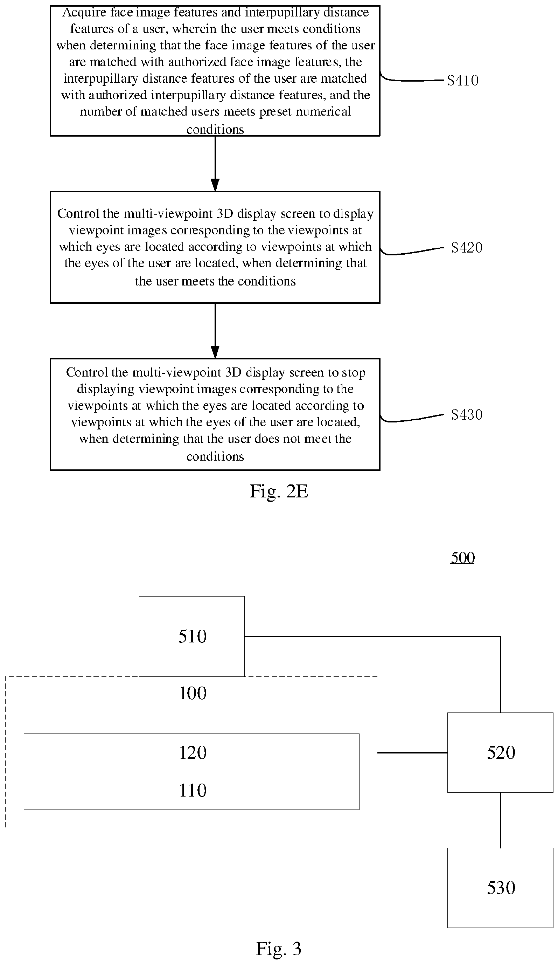

As shown in Fig. 2E, an embodiment of the present disclosure provides a multi-viewpoint 3D display control method, comprising the following steps:
S410, acquiring face image features and interpupillary distance features of a user, wherein the user meets conditions when determining that the face image features of the user are matched with authorized face image features, the interpupillary distance features of the user are matched with authorized interpupillary distance features, and the number of matched users meets preset numerical conditions; and the watching efficiency is guaranteed through triple matching conditions;
S420, controlling the multi-viewpoint 3D display screen to display viewpoint images corresponding to the viewpoints at which the eyes are located according to viewpoints at which eyes of the user are located, when determining that the user meets the conditions; and
S430, controlling the multi-viewpoint 3D display screen to stop displaying viewpoint images corresponding to the viewpoints at which the eyes are located according to viewpoints at which eyes of the user are located, when determining that the user does not meet the conditions.

In the above embodiments, involved in requiring of determining whether the number of authorized users meets the preset conditions, a step of sharing watching links may also be provided; and after successfully purchasing tickets, the authorized users can share the links, so that more users can participate in the watching process, and waiting time for meeting the preset conditions can be shortened.

It should be noted that, since most of positions of watchers change dynamically, the face identification process may be performed once regularly. However, information of viewpoints, at which the eyes are located, needs to be extracted in real time, to ensure an effect of watching 3D display.

The multi-viewpoint 3D display screen 100 in embodiments of the present disclosure can also be provided with a relationship storing spatial positions and viewpoints, which may be acquired by pre-measurement, and may also be acquired after preliminary calculation and actual calibration.

In some embodiments of the present disclosure, the information of viewpoints, at which the eyes are located, may be collected separately, and may also be extracted from the face images in real time. Namely, the multi-viewpoint 3D display control method in the embodiment of the present disclosure further comprises: collecting face images of the user in real time, and extracting the information of viewpoints at which the eyes are located, from the face images. The face image features are acquired through the neural network model, for example, a facial rectangle is acquired, and the positions of eyes are extracted from the facial rectangle.

In some embodiments of the present disclosure, face collection for the authorized users may be performed by utilizing the multi-viewpoint 3D display screen 100; the multi-viewpoint 3D display screen may be provided with an image collection apparatus; after a user selects a to-be-watched movie on the multi-viewpoint 3D display screen 100, the multi-viewpoint 3D display screen 100 generates a payment order according to the selected movie video, and the user can scan a code to pay the order through third-party payment software, or synchronize the payment order to a mobile phone corresponding to an account and pay from a mobile phone terminal; after the payment is successful, the multi-viewpoint 3D display screen 100 will jump to a face collection interface after receiving a message of successful payment of the order, to prompt the user to perform face feature collection and generate authorized face features; at this time, the multi-viewpoint 3D display screen 100 may only record face image features, and may also record face image features and features of both eyes extracted from the face image features, for example, recording positions of the both eyes in the facial rectangle, a position of a single eye in the facial rectangle, or a relative position between one eye and the other eye. The recorded positions of the eyes relative to the facial rectangle can simplify the viewpoint positioning process, or improve the positioning accuracy, in the subsequent viewpoint positioning process. The introduction is as follows.

In some embodiments of the present disclosure, the real-time information of viewpoints, at which the eyes are located, can also be used to acquire the viewpoints at which the eyes are located according to the pre-stored positions of the eyes in the facial rectangle and the real-time collected position of the facial rectangle. When the user is determined to be an authorized user, the information of the positions of the eyes on the face corresponding to the user is queried and acquired; and the information of the viewpoints, at which the eyes of the user are located, is acquired according to information of a position of a face image of the user and information of positions of the eyes on the face. After the image collection apparatus collects the face image of the user, face verification and authentication are performed; after approval, continue to collect the viewpoint information; a spatial position, at which the facial rectangle is, is acquired from the face image; then, the spatial position, at which the eyes of the currently authorized user are located, according to the information of positions of the eyes on the face corresponding to the user; and information of positions of viewpoints at which the eyes are located is acquired according to a correspondence between the spatial position and the viewpoints, thereby dynamically adjusting subpixels corresponding to the viewpoint position information in composite pixels CP in the multi-viewpoint 3D display screen 100 to be lighted up according to the real-time viewpoint position information, and dynamically displaying 3D images according to the real-time viewpoint position information.

In some embodiments of the present disclosure, in order to avoid a situation that the normal 3D display cannot be achieved because, in the viewpoint collection process, only the spatial position or viewpoint position of a single eye is acquired, but the viewpoint position or spatial position of the other eye cannot be collected temporarily; in some embodiments of the present disclosure, by the pre-stored relative position between one eye and the other eye and an identified spatial position or viewpoint position of a single eye, the spatial position or viewpoint position of the other eye is acquired. When the user is determined to be an authorized user, information of a relationship between the left and right eyes and the viewpoints corresponding to the user or a spatial relative position relationship between the left and right eyes is queried and acquired; and information of position of viewpoint, at which the other of the left and right eyes of the user is located, is acquired according to information of position of viewpoint at which one of the left and right eyes of the user is located and the information of the relationship between the left and right eyes and the viewpoints, or the spatial relative position relationship between the left and right eyes.

The face image features, relationship features between the eyes and the face, and relationship features between the eyes of the authorized user may be collected and acquired at the multi-viewpoint 3D display screen 100, may also be collected and acquired at a mobile phone terminal of the user, and may also be acquired at a unified collection terminal of a cinema; the features, acquired remotely, may be uploaded to a server, stored by the server uniformly, transmitted uniformly when being requested by the multi-viewpoint 3D display screen 100; or the acquired information can be directly transmitted to the multi-viewpoint 3D display screen in real time.

In some embodiments of the present disclosure, the step of determining that the face image features of the user are matched with the authorized face image features comprises, obtaining video information of a currently playing 3D video, acquiring the authorized face image features according to the video information, and matching the face image features of the user with the authorized face image features. Through the video name, or video ID number of the currently playing 3D video, the authorized face image features are acquired by performing information indexing from a local terminal, and then are matched.

In some embodiments of the present disclosure, the authorized face image features are acquired from the server; and the control method in the embodiments of the present disclosure further comprises: transmitting a video playing request containing a to-be-played video, so that the server transmits the authorized face image features associated with information of the to-be-played video, and receiving the authorized face image features associated with the information of the to-be-played video.

In some embodiments of the present disclosure, selection of videos, payment, and collection of the authorized face features are completed by one terminal; embodiments of the present disclosure further comprise: receiving a 3D video selection instruction to generate a video order, and after receiving an instruction of successful payment of the video order, turning on a camera to collect image information of the user, to generate authorized face image features. The user performs the selection of videos, payment and collection of face image features through the multi-viewpoint 3D display screen 100.

In some embodiments of the present disclosure, selection of videos, payment, and collection of the authorized face features are realized by cooperation of two terminals; after receiving an instruction of successful payment of a video order, a camera is turned on to collect image information of the user, to generate the authorized face image features corresponding to a 3D video; and the video corresponds to the video order. A mobile phone terminal held by the user or a payment terminal near the multi-viewpoint 3D display screen 100 selects the video, and then makes payment; after the payment is successful, an instruction of successful payment of a video order is transmitted to the multi-viewpoint 3D display screen 100 or a control apparatus of the multi-viewpoint 3D display screen 100; the multi-viewpoint 3D display screen 100 or the control apparatus of the multi-viewpoint 3D display screen 100 turns on a camera to collect image information of the user, generate authorized face image features corresponding to a 3D video, then store the features, and perform face authentication after receiving an instruction of starting to play. Alternatively, the authorized face features are collected at the payment terminal; and the authorized face image features are collected by the payment terminal after the user pays the order at the payment terminal. The payment terminal collects and transmits the authorized face image features to the server or directly to the multi-viewpoint 3D display screen 100.

The face image feature matching process in embodiments of the present disclosure may be performed at the local terminal, and may also be performed at the server terminal; for example, the step of determining that the face image features of the user are matched with the authorized face image features comprises: transmitting video information of a currently playing 3D video and the face image features of the user to the server so that the server can acquire the authorized face image features according to the video information of the currently playing 3D video, matching the face image features of the user with the authorized face image features, and returning the matching results; and receiving the matching results. The multi-viewpoint 3D display screen 100 determines whether the conditions are met according to the matching results.

The control method, in some embodiments of the present disclosure, further comprises: transmitting a device number of the 3D display screen to the server, so that after the server verifies that the device number is qualified, information of a to-be-played video image transmitted by the server is received. A playing device is verified, to prevent unauthorized playing by an illegal device.

In some embodiments of the present disclosure, the real-time viewpoint information is collected by an eye positioning technology; and eye positioning is performed for the user to acquire information of viewpoints at which the eyes of the user are located when determining that the user meets the conditions.

The multi-viewpoint 3D display control method in embodiments of the present disclosure can rapidly and flexibly authenticate users, collect eye viewpoint information of authorized users, and control the playing of images of left and right eyes according to the eye viewpoint information collection. The method realizes 3D movie playing without supervision by supervisors, saves many management steps in existing cinemas, saves manpower, and improves operating efficiency.

On the other hand, as shown in Fig. 3, the present disclosure further provides a multi-viewpoint 3D display device 500, comprising a multi-viewpoint 3D display screen 100 provided with a display panel 110 and gratings 120, an image collection apparatus 510 and a 3D processing apparatus 520; the multi-viewpoint 3D display screen 100 comprises m×n composite pixels to form a display resolution of m×n; the composite pixels comprise a plurality of composite subpixels; each composite subpixel comprises i homochromatic subpixels corresponding to i viewpoints, wherein i is greater than or equal to 3; the multi-viewpoint 3D display screen 100 is used for rendering subpixels in the composite pixels corresponding to viewpoint information; the image collection apparatus 510 is configured to collect face image features of a user; the 3D processing apparatus 520 is configured to control the 3D display screen to display viewpoint images corresponding to information of viewpoints at which eyes are located, according to the information of viewpoints at which eyes of the user are located, when determining that the user meets conditions according to face image features of the user. The multi-viewpoint 3D display device 500 can authenticate the user; after the authentication is satisfied, viewpoint information can be acquired; and 3D image display can be performed according to the viewpoint information.

The 3D processing apparatus is configured to acquire identity features of the user, and control the multi-viewpoint 3D display screen to perform display 3D for the user when the identity features meet the conditions.

In some embodiments of the present disclosure, the 3D processing apparatus 520 is configured to: acquire the face image features of the user, and determine that the user meets conditions when determining that the face image features of user are matched with authorized face image features; or,
acquire the face image features and interpupillary distance features of the user, and determine that the user meets the conditions when determining that the face image features of the user are matched with authorized face image features and the interpupillary distance features of the user are matched with authorized interpupillary distance features; or,
acquire the face image features of the user, and determine that the user meets the conditions when determining that the face image features of the user are matched with authorized face image features and the number of matched users meets preset numerical conditions; or,
acquire the face image features and interpupillary distance features of the user, and determine that the user meets the conditions when determining that the face image features of the user are matched with authorized face image features, the interpupillary distance features of the user are matched with authorized interpupillary distance features and the number of matched users meets preset numerical conditions.

Through a variety of conditions, multiple verification and authentication are realized to meet use requirements.

In some embodiments of the present disclosure, the 3D processing apparatus 520 is further configured to control the 3D display screen to stop displaying viewpoint images corresponding to information of viewpoints at which the eyes are located according to the information of viewpoints at which the eyes of the user are located, when determining that the user does not meet the conditions.

In some embodiments of the present disclosure, the image collection apparatus 510 is further configured to collect the face images of the user in real time; and the 3D processing apparatus is further configured to extract and obtain information of the viewpoints, at which the eyes are located, from the face images.

In some embodiments of the present disclosure, the multi-viewpoint 3D display device 500 further comprises an eye positioning device 530; and the eye positioning device 530 is used for acquiring the information of the viewpoints at which the eyes of the user are located.

In some embodiments of the present disclosure, the multi-viewpoint 3D display device 500 further comprises an image collection apparatus, which is further configured to collect the face image features of the authorized users.

Execution steps of the 3D processing apparatus 520 are described in detail in corresponding steps of the multi-viewpoint 3D display control method, and will not be repeated here.

In some embodiments of the present disclosure, a multi-viewpoint 3D display device 1000 is provided, can also be applied to the 3D display authentication control process; and the multi-viewpoint 3D display device 1000 comprises: a multi-viewpoint 3D display screen 100, including mxn composite pixels CP and thus defining a display resolution of m×n; a video signal interface 140 for receiving video frames of 3D video signals, wherein the video frames of the 3D video signals contain two images with a resolution of m×n or a composite image with a resolution of 2m×n or m×2n; and at least one 3D processing apparatus 130.

In some embodiments, each composite pixel CP comprises a plurality of composite subpixels CSP; and each composite subpixel is composed of i homochromatic subpixels corresponding to i viewpoints, wherein i≥3.

In some embodiments, at least one 3D processing apparatus 130 is configured to render at least one subpixel in each composite subpixel based on one of the two images and render at least another subpixel in each composite subpixel based on the other of the two images.

In some other embodiments, at least one 3D processing apparatus 130 is configured to render at least two subpixels in each composite subpixel based on the composite image.

Fig. 1A shows a structural schematic diagram of a multi-viewpoint 3D display device 1000 according to an embodiment of the present disclosure. Referring to Fig. 1A, an embodiment of the present disclosure provides a multi-viewpoint 3D display device 1000, which may comprise a multi-viewpoint 3D display screen 100, at least one 3D processing apparatus 130 and a video signal interface 140 for receiving video frames of 3D video signals.

In an embodiment shown in Fig. 1A, the multi-viewpoint 3D display screen 100 may comprise m×n composite pixels CP and thus define a display resolution of m×n. As shown in Fig. 1A, the multi-viewpoint 3D display screen 100 comprises m columns and n rows of composite pixels CP and thus defines a display resolution of m×n.

In some embodiments, each composite pixel CP comprises a plurality of composite subpixels; each composite subpixel is composed of i homochromatic subpixels corresponding to i viewpoints; and i≥3. In the embodiment shown in Fig. 1A, i=6; but conceivably, i may be other numbers. In the illustrated embodiments, the multi-viewpoint 3D display device may have i (i=6) viewpoints (V1-V6) correspondingly, but conceivably may have more or fewer viewpoints correspondingly.

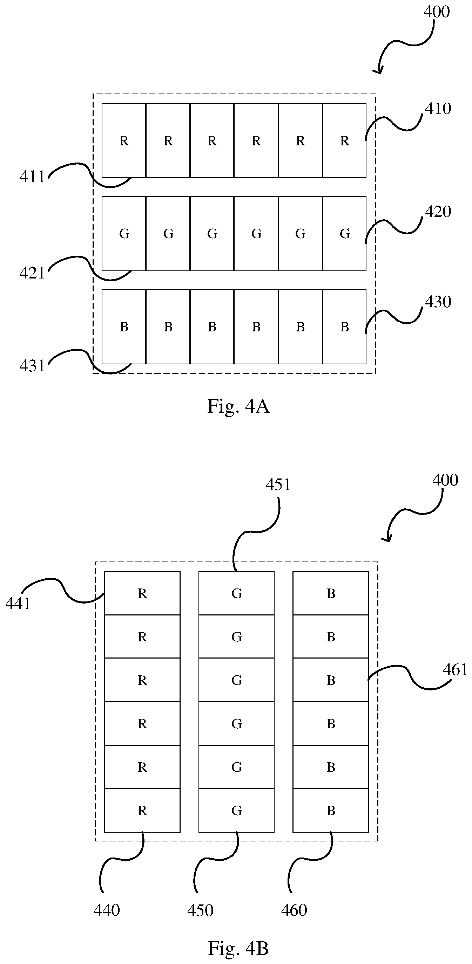

Referring to Figs. 1A and 4A, in the illustrated embodiments, each composite pixel comprises three composite subpixels; and each composite subpixel is composed of six homochromatic subpixels corresponding to six viewpoints (i=6). The three composite subpixels respectively correspond to three colors, i.e., red (R), green (G) and blue (B). In other words, the three composite subpixels of each composite pixel respectively have six red subpixels, six green subpixels or six blue subpixels.

In the embodiments shown in Figs. 1A and 4A, composite subpixels 410, 420, and 430 in a composite pixel 400 are arranged in parallel. Each composite subpixel 410, 420, or 430 comprises subpixels 411, 421, and 431 in a single row. However, conceivably, the composite subpixels in each composite pixel are in different arrangement forms or the subpixels in each composite subpixel are in different arrangement forms.

As shown in Fig. 4B, each composite subpixel 440, 450, or 460 comprises subpixels 441, 451, and 461 in a single row.

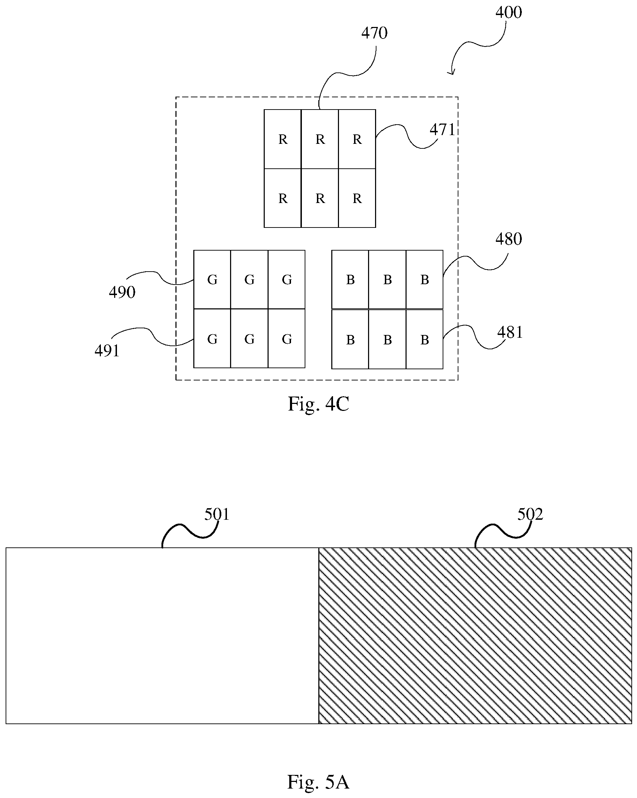

As shown in Fig. 4C, the three composite subpixels 470, 480, and 490 in the composite pixel 400 are arranged, for example, in a shape of a triangle. In an embodiment shown in Fig. 4C, the subpixels 471, 481, and 491 in each composite subpixel 470, 480, or 490 may be in the form of an array (3×2).

In some embodiments, as shown in Figs. 1A-1C, the multi-viewpoint 3D display device 1000 may be provided with a single 3D processing apparatus 130. The single 3D processing apparatus 130 simultaneously processes the rendering of each composite subpixel of each composite pixel of a large-size 3D display screen 100.

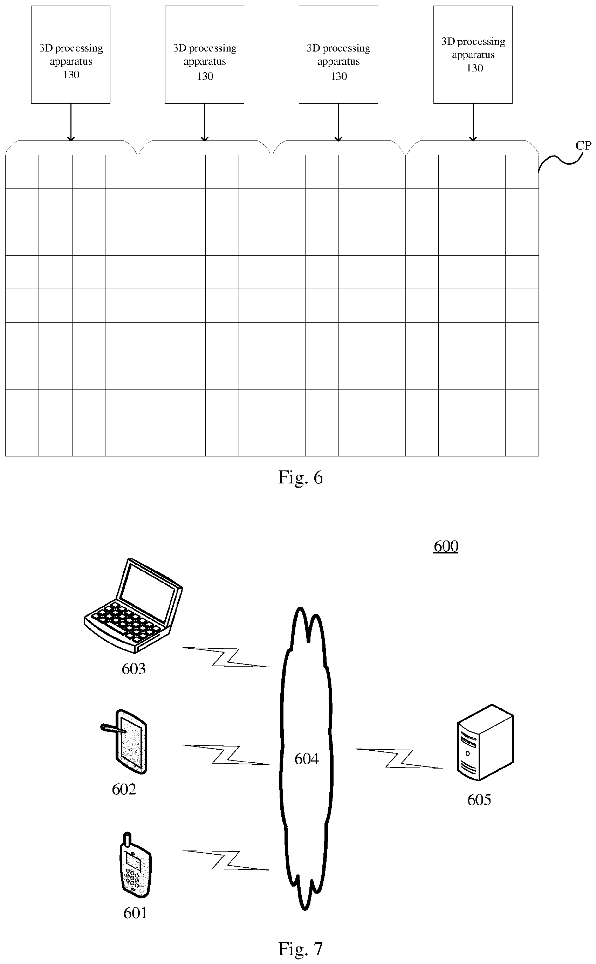

In some other embodiments, as shown in Fig. 6, the multi-viewpoint 3D display device 1000 may be provided with at least two 3D processing apparatuses 130, which process the rendering of subpixels of each composite subpixel of each composite pixel of the large-size 3D display screen 100 in parallel, series or a combination of series and parallel.

Those skilled in the art will understand that, the above at least two 3D processing apparatuses may allocate and process multiple rows and columns of composite pixels or composite subpixels of the large-size multi-viewpoint 3D display screen 100 in parallel in other ways, which falls within the scope of embodiments of the present disclosure.

In some embodiments, at least one 3D processing apparatus 130 may optionally comprise a buffer 131, to buffer the received video frames.

In some embodiments, at least one 3D processing apparatus 130 is a field programmable gate array (FPGA) or application specific integrated circuit (ASIC) chip or an FPGA or ASIC chipset.

Continuing to refer to Fig. 1A, the multi-viewpoint 3D display device 1000 may further comprise a processor 101 communicatively connected to at least one 3D processing apparatus 130 through the video signal interface 140. In some embodiments shown herein, the processor 101 is contained in a computer or an intelligent terminal such as a mobile terminal, or serves as a processor unit. However, conceivably, in some embodiments, the processor 101 may be arranged outside the multi-viewpoint 3D display device, for example, the multi-viewpoint 3D display device may be a multi-viewpoint 3D display device with a 3D processing apparatus, such as a non-smart 3D TV or a non-smart cinema display screen.

For the sake of simplicity, the following exemplary embodiment of the multi-viewpoint 3D display device internally comprises a processor. Further, the video signal interface 140 is configured as an internal interface for connecting the processor 101 with the 3D processing apparatus 130. In some embodiments of the present disclosure, the video signal interface 140 as the internal interface of the multi-viewpoint 3D display device may be a mobile industry processor interface (MIPI), a mini-MIPI, a low voltage differential signaling (LVDS) interface, a mini-LVDS interface or a Display Port interface. In some embodiments, as shown in Fig. 1A, the processor 101 of the multi-viewpoint 3D display device 1000 may further comprise a register 122. The register 122 may be used for temporarily storing instructions, data and addresses.

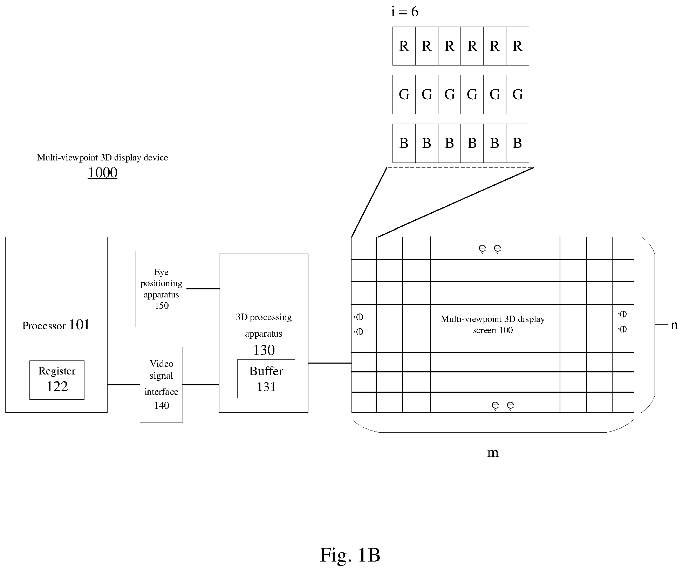

In some embodiments, the multi-viewpoint 3D display device 1000 may further comprise an eye positioning apparatus or an eye positioning data interface for acquiring real-time eye positioning data, so that the 3D processing apparatus 130 may render corresponding subpixels in the composite pixels (composite subpixels) based on the eye positioning data. For example, in an embodiment shown in Fig. 1B, the multi-viewpoint 3D display device 1000 further comprises an eye positioning apparatus 150 communicatively connected to the 3D processing apparatus 130, so that the 3D processing apparatus 130 can directly receive the eye positioning data. In an embodiment shown in Fig. 1C, an eye positioning apparatus (not shown), for example, may be directly connected to the processor 101; and the 3D processing apparatus 130 acquires eye positioning data from the processor 101 through an eye positioning data interface 151. In other embodiments, the eye positioning apparatus may be simultaneously connected with the processor and the 3D processing apparatus, so that on the one hand, the 3D processing apparatus 130 may directly acquire eye positioning data from the eye positioning apparatus, and on the other hand, other information acquired by the eye positioning apparatus may be processed by the processor.

In some embodiments, the multi-viewpoint 3D display device 1000 may further comprise an image collection apparatus, for acquiring face images of the user, so that the 3D processing apparatus 130 can match the acquired face image features with the authorized face image features, to determine whether the conditions are met.

Referring to Figs. 1A-C and Figs. 5A-E, transmission and display of 3D video signals in the multi-viewpoint 3D display device according to some embodiments of the present disclosure are described. In the illustrated embodiments, the multi-viewpoint 3D display screen 100 may define six viewpoints V1-V6; and eyes of the user may see the display of corresponding subpixels in the composite subpixels of each composite pixel in a display panel of the multi-viewpoint 3D display screen 100 at each viewpoint (spatial position). Two different pictures seen by both eyes of the user at different viewpoints form parallax, to composite a 3D picture in the brain.

In some embodiments of the present disclosure, the 3D processing apparatus 130 receives video frames of such as a decompressed 3D video signal from the processor 101 through, for example, the video signal interface 140 as the internal interface. Each video frame may contain two images with a resolution of m×n, or contain a composite image with a resolution of 2m×n or m×2n, or be composed of the above images.

In some embodiments, the two images or the composite image may comprise different types of images and may be in various arrangement forms.

As shown in Fig. 5A, each video frame of the 3D video signals contains or is composed of two images 501 and 502 with a resolution of m×n in a parallel format. In some embodiments, the two images may be a left-eye parallax image and a right-eye parallax image, respectively. In some embodiments, the two images may be a rendered color image and a depth of field (DOF) image, respectively.

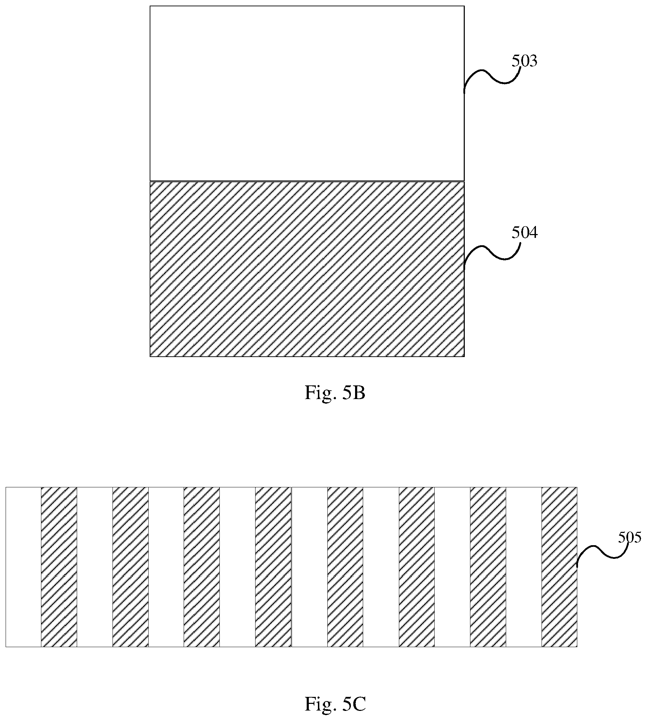

As shown in Fig. 5B, each video frame of the 3D video signals contains or is composed of two images 503 and 504 with a resolution of m×n in a top-and-bottom format. In some embodiments, the two images may be a left-eye parallax image and a right-eye parallax image, respectively. In some embodiments, the two images may be a rendered color image and a DOF image, respectively.

As shown in Fig. 5C, each video frame of the 3D video signals contains a composite image 505 with a resolution of 2m×n in a left-right interlaced format. In some embodiments, the composite image may be a left-right interlaced left-eye and right-eye parallax composite image, and a left-right interlaced rendered color and DOF composite image.

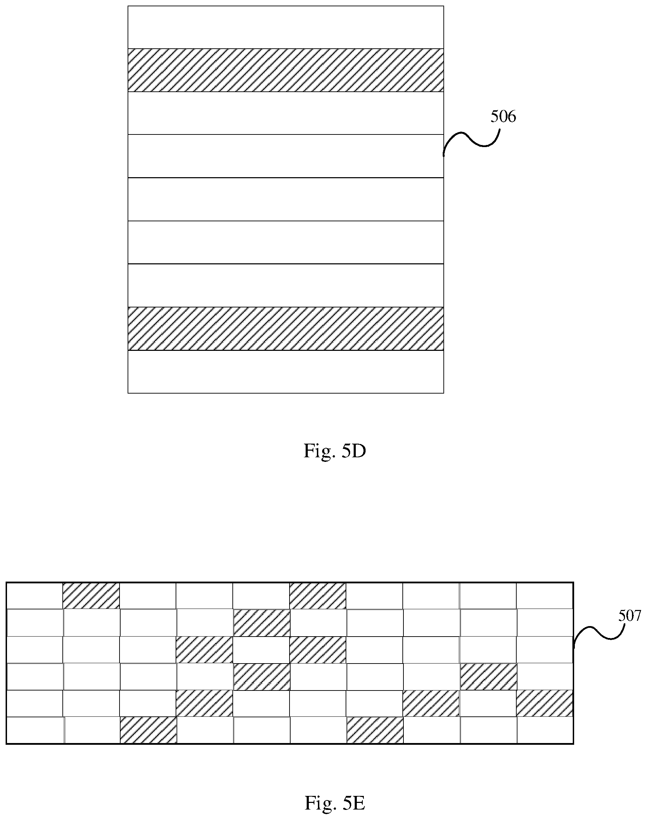

As shown in Fig. 5D, each video frame of the 3D video signals contains a composite image 506 with a resolution of m×2n in a top-bottom interlaced format. In some embodiments, the composite image may be a top-bottom interlaced left-eye and right-eye parallax composite image. In some embodiments, the composite image may be a top-bottom interlaced rendered color and DOF composite image.

As shown in Fig. 5E, each video frame of the 3D video signals contains a composite image 507 with a resolution of 2m×n in a checkboard format. In some embodiments, the composite image may be a left-eye and right-eye parallax composite image in the checkboard format. In some embodiments, the composite image may be a rendered color and DOF composite image in the checkboard format.

Those skilled in the art will understand that embodiments shown in the accompanying drawings are only schematic, and the two images or composite image contained in each video frame of the 3D video signals may comprise other types of images and may be in other arrangement forms, which fall within the scope of the present disclosure.

In some embodiments, the resolution of m×n may be higher than full high definition (FHD), comprising but not limited to 1920×1080, 1920×1200, 2048×1280, 2560×1440, 3840×2160 and the like.

In some embodiments, after receiving a video frame comprising two images, at least one 3D processing apparatus 130 renders at least one subpixel in each composite subpixel based on one of the two images and renders at least another subpixel in each composite subpixel based on the other of the two images. Similarly, in other embodiments, after receiving a video frame comprising the composite image, at least one 3D processing apparatus renders at least two subpixels in each composite subpixel based on the composite image. For example, at least one subpixel is rendered according to a first image (part) in the composite image, and at least another subpixel is rendered according to a second image (part).

In some embodiments, the rendering, for example, is dynamic rendering based on the eye positioning data.

By way of explanation but not limitation, since video frame data received by the 3D processing apparatus 130 in embodiments of the present disclosure through, for example, the video signal interface 140 configured as an internal interface contain two images; and the resolution of each image (or half of the resolution of the composite image) corresponds to a composite pixel (which comprise composite subpixels divided according to the viewpoints) divided according to the viewpoints. On the one hand, since the viewpoint information irrelevant to the transmission process, 3D display with little processing calculation and no loss of resolution can be realized; on the other hand, since the composite pixels (composite subpixels) are arranged corresponding to the viewpoints, the rendering of the display screen can be realized in a "point-to-point" manner, which greatly reduces the calculation. In contrast, transmission and display of images or videos of conventional 3D display devices are still based a 2D display panel, which not only has problems of reduction in resolution and dramatic increase in rendering calculation, but also may have problems of multiple-time format adjustment and display adaptation of images or videos.

In some embodiments, the register 122 of the processor 101 can be used for receiving information of display requirements of the multi-viewpoint 3D display screen 100; the information is typically information that is irrelevant to i viewpoints and relevant to the m×n resolution of the multi-viewpoint 3D display screen 100, so that the processor 101 may transmit video frames of 3D video signals meeting the display requirements to the multi-viewpoint 3D display screen 100. The information, for example, may be a data packet transmitted for initially establishing video transmission.

Therefore, when transmitting the video frames of the 3D video signals, the processor 101 does not need to consider information relevant to i viewpoints of the multi-viewpoint 3D display screen 110 (i≥3). Instead, the processor 101 may transmit video frames of 3D video signals meeting the requirements to the multi-viewpoint 3D display screen 100 by means of the information, relevant to the m×n resolution of the large-size multi-viewpoint 3D display screen 100, received by the register 122.

In some embodiments, the multi-viewpoint 3D display device 1000 may further comprise a codec, configured to decompress and encode compressed 3D video signals and transmit the decompressed 3D video signals to at least one 3D processing apparatus 130 through the video signal interface 140.

In some embodiments, the processor 101 of the multi-viewpoint 3D display device 1000 reads the video frames of the 3D video signals from the memory or receives the video frames of the 3D video signals from outside the multi-viewpoint 3D display device 1000, for example, through an external interface, and then transmits the read or received video frames of the 3D video signals to at least one 3D processing apparatus 130 through the video signal interface 140.

In some embodiments, the multi-viewpoint 3D display device 1000 further comprises a format adjuster (not shown), for example, being integrated in the processor 101, being configured as a codec or serving as a part of the GPU, and being used for preprocessing the video frames of the 3D video signals, so that the contained two images have a resolution of m×n or the contained composite image has a resolution of 2m×n or m×2n.

In another solution, a 3D display system is further provided, comprising a processor unit and the multi-viewpoint 3D display device; and the processor unit is communicatively connected with the multi-viewpoint 3D display device.

In some embodiments, the 3D display system is configured as a smart TV or a smart screen of the cinema having the processor unit.

The multi-viewpoint 3D display screen 100 is used for displaying 3D images or videos. The multi-viewpoint 3D display screen 100 comprises a display panel. The display panel may be a liquid crystal display (LCD), an organic light-emitting diode (OLED), an active matrix organic light-emitting diode or initiative matrix organic light-emitting diode (AMOLED), a flexible light-emitting diode (FLED), a Mini-LED, a Micro-LED, a Micro-OLED, a quantum dot light-emitting diode (QLED) or the like.

In some embodiments, the eye positioning apparatus 150 is communicatively connected to a 3D processing unit 130, so that the 3D processing unit130 may render the corresponding subpixels in the composite pixels (composite subpixels) based on the eye positioning data. In some embodiments, the eye positioning apparatus 150 may further be connected with the processor 201, for example, be in by-passing connection with the processor 201.

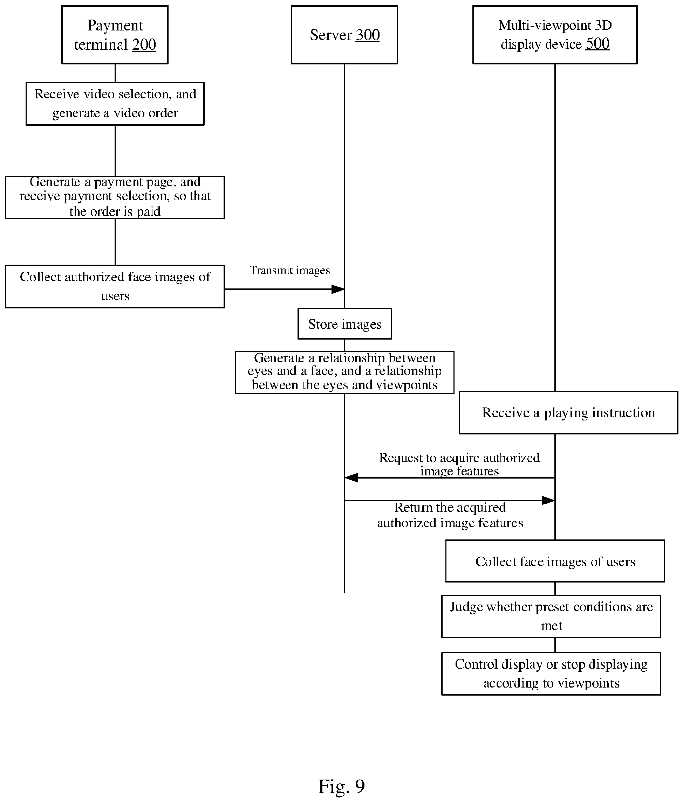

In some embodiments of the present disclosure, as shown in Fig. 9, a multi-viewpoint 3D display system is further provided, comprising the multi-viewpoint 3D display device 500, and further comprising a payment terminal 200 and a server 300; and the payment terminal 200 is used for collecting authorized face image features, and transmitting the authorized face image features to the server 300. The payment terminal 200 receives video selection, generates a video order, generates a payment page according to the video order, so that the user makes payment according to the payment page, for example, jumping to a third-party payment platform for payment, or generating a 2D barcode, so that another device can scan for payment, collects a face after payment, and then transmits video information (video ID, video name), face images or image features of the authorized users to the server for storage; and according to the received face features, the server can extract a position relationship between eyes and a facial rectangle, or a relationship between the eyes, or a relationship between the eyes and viewpoints. When receiving a playing instruction, the multi-viewpoint 3D display device 500 generates a request for authorized face image features according to the to-be-played video information and transmits the request to the server 300; the server 300 transmits the authorized face image features and other information corresponding to the video information to the multi-viewpoint 3D display device 500; and the multi-viewpoint 3D display device 500 collects the face images of the user, then matches the face images, to determine whether the conditions are met, displays images corresponding to the viewpoint information according to the viewpoint information when the conditions are met, and controls the subpixels corresponding to the viewpoint information to stop displaying according to the viewpoint information or does not display when the conditions are not met.

In some embodiments of the present disclosure, the server 300 is further used for generating information of positions of the eyes on the face, or information of a relationship between the left and right eyes and the viewpoints, according to the authorized face image features.

Execution steps of the payment terminal and the server are introduced in the above embodiments, and can be referred to each other.

Fig. 7 shows an exemplary system architecture 600 to which an embodiment of a multi-viewpoint 3D display control method or a multi-viewpoint 3D display control apparatus in embodiments of the present application may be applied.

As shown in Fig. 7, the system architecture 600 may comprise terminal devices 601, 602, and 603, a network 604 and a server 605. The network 604 is a medium for providing communication links between the terminal devices 601, 602, and 603 and the server 605. The network 604 may comprise various connection types, such as wired and wireless communication links or fiber optic cables.

Users may adopt the terminal devices 601, 602, and 603 to interact with the server 605 through the network 604, to receive or transmit data (e.g., video) and the like. The terminal devices 601, 602, and 603 may be equipped with various communication client applications, such as video playing software, video processing applications, web browser applications, shopping applications, search applications, instant messaging tools, email clients, and social platform software.

The terminal devices 601, 602, and 603 may be hardware or software. When the terminal devices 601, 602, and 603 are hardware, the terminal devices may be various multi-viewpoint 3D display devices having display screens and supporting data transmission, including but not limited to smart phones, tablet personal computers, laptop computers, desktop computers and the like. When the terminal devices 601, 602, and 603 are software, the terminal devices can be installed in the multi-viewpoint 3D display devices listed above. The terminal devices may be implemented as a plurality of software or software modules (e.g., software or software modules for providing distributed services), and may also be implemented as single software or software module. No limitation is provided here.

The server 605 may be a server providing various services, such as a background server providing support for videos displayed on the terminal devices 601, 602, and 603. The background server may analyze and process the received data such as image processing requests, and feed processing results (e.g., video clips or other data obtained after video segmentation) back to the communicatively connected multi-viewpoint 3D display device (e.g., a terminal device).

It should be noted that the multi-viewpoint 3D display control method provided by embodiments of the present application may be implemented by the server 605; and accordingly, the multi-viewpoint 3D display control apparatus may be arranged in the server 605. In addition, the multi-viewpoint 3D display control method provided by embodiments of the present application may also be implemented by the terminal devices 601, 602, and 603; and correspondingly, the multi-viewpoint 3D display control apparatus may also be arranged in the terminal devices 601, 602, and 603.

It should be noted that, the server may be hardware, and may also be software. When the server is hardware, the server may be implemented as a distributed server cluster composed of multiple servers, and may also be implemented as a single server. When the server is software, the server may be implemented as a plurality of software or software modules (e.g., software or software modules for providing distributed services), and may also be implemented as single software or software module. No limitation is provided here.

It should be understood that the numbers of terminal devices, networks and servers in Fig. 7 are only schematic. According to implementation requirements, any number of terminal devices, networks and servers are available. When the multi-viewpoint 3D display device on which the multi-viewpoint 3D display control method runs does not need data transmission with other multi-viewpoint 3D display devices, the system architecture may only comprise the multi-viewpoint 3D display device on which the multi-viewpoint 3D display control method runs (such as the terminal devices 601, 602, and 603 or the server 605).

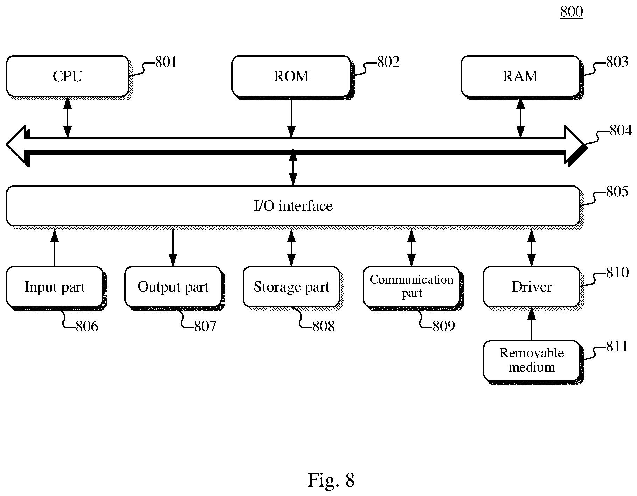

Referring to Fig. 8 below, the figure shows a structural schematic diagram of a computer system 800 suitable for implementing the 3D processing apparatus of embodiments of the present application. The 3D processing apparatus shown in Fig. 8 is only an example, and should not impose any limitation on functions and application scope of embodiments of the present application.

As shown in Fig. 8, the computer system 800 comprises a CPU 801, which may perform various appropriate actions and processes according to programs stored in a read-only memory (ROM) 802 or programs loaded from a storage part 808 into a random access memory (RAM) 803. The RAM 803 further stores various programs and data required for the operation of the system 800. The CPU 801, the ROM 802 and the RAM 803 are connected with each other through a bus 804. An input/output (I/O) interface 805 is also connected to the bus 804.

The following components are connected to the I/O interface 805: an input part 806 including a keyboard, a mouse and the like; an output part 807 including a cathode ray tube (CRT), a liquid crystal display (LCD) and the like, as well as a loudspeaker and the like; a storage part 808 including a hard disk and the like; and a communication part 809 including a local area network (LAN) card, and network interface cards of a modem and the like. The communication part 809 performs communication processing through a network such as the Internet. A driver 810 is also connected to the I/O interface 805 as required. Removable media 811, such as magnetic disks, optical disks, magneto-optical disks, semiconductor memories and the like, are mounted on the driver 810 as required, so that computer programs read from the removable media are installed into the storage part 808 as required.

Particularly, according to embodiments of the present disclosure, processes described above with reference to a flowchart may be implemented as computer software programs. For example, embodiments of the present disclosure comprise a computer program product, which comprises computer programs loaded on a computer-readable medium; and the computer programs contain program codes for implementing the method shown in the flowchart. In such an embodiment, the computer programs may be downloaded and installed from the network through the communication part 809, and/or installed from the removable media 811. When the computer programs are executed by the CPU 801, functions defined in the method of the present application are implemented.

It should be noted that the computer-readable medium of the present application may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or a combination of any of the above. Examples of the computer-readable storage medium may include, but not limited to: electrical connection with one or more wires, portable computer disks, hard disks, random access memory (RAM), read only memory (ROM), erasable programmable read only memory (EPROM or flash memory), optical fibers, portable compact disk read only memory (CD-ROM), optical storage devices, magnetic storage devices, or any suitable combination of the above. In the present application, the computer-readable storage medium may be any tangible medium that contains or stores a program, and the program may be used by or in conjunction with an instruction execution system, apparatus, or device. In the present application, a computer-readable signal medium may include a data signal propagated in baseband or as part of a carrier wave, carrying computer-readable program codes therein. The propagated data signal may take a variety of forms, including but not limited to electromagnetic signals, optical signals, or any suitable combination of the above. The computer-readable signal medium may also be any computer-readable medium other than the computer-readable storage medium that can transmit, propagate, or transport the program for use by or in connection with the instruction execution system, apparatus, or device. Program codes contained on the computer-readable medium may be transmitted by using any suitable medium including, but not limited to, radio, wire, cable, RF, etc., or any suitable combination of the above.

Computer program codes for executing the operation of the present application may be written in one or more programming languages or combinations, and the programming languages include object-oriented programming languages, such as Python, Java, Smalltalk and C++, and also include conventional procedural programming language, such as "C" language or similar programming language. The program codes may be executed entirely on a computer of a user, partly on the computer of the user, as a stand-alone software package, partly on the computer of the user and partly on a remote computer, or entirely on the remote computer or server. In the case of the remote computer, the remote computer may be connected to the computer of the user through any kind of network, including a local area network (LAN) or a wide area network (WAN), or may be connected to an external computer (such as, connected through Internet using an Internet service provider).

The flow charts and block diagrams in the drawings illustrate architectures, functions and operations possibly implemented by systems, methods and computer program products according to various embodiments of the present application. In this regard, each block in the flow charts or block diagrams may represent a part of a module, program segment or code, and part of the module, program segment or code contains one or more executable instructions for implementing specified logical functions. It should also be noted that, in some alternative implementations, the functions marked in the blocks may also occur in an order different from the order marked in the drawings. For example, two continuous blocks may actually be executed substantially concurrently, or sometimes may be executed in a reverse order, depending on the functions involved. It should also be noted that, each block in the block diagrams and/or flow charts, and combinations of the blocks in the block diagrams and/or flow charts, can be implemented by special hardware-based systems that perform specified functions or operation, or implemented by combinations of special hardware and computer instructions.

Involved units described in the embodiments of the present application may be implemented in a software manner, and may also be implemented in a hardware manner. The described units may also be arranged in a processor, and for example, may be described as: a processor includes an acquisition unit, a segmentation unit, a determination unit and a selection unit. The names of these units do not constitute a limitation to the units itself under certain conditions, and for example, the acquisition unit may also be described as "a unit for acquiring a user image to be processed".

As another aspect, the present disclosure further provides a computer-readable storage medium which stores computer-executable instructions; and the computer-executable instructions are configured to execute the above display control method.

A computer program product provided by the embodiments of the present disclosure comprises computer programs stored on the computer-readable storage medium; the computer programs comprise program instructions; and the computer executes the above display control method when the program instructions are executed by a computer.

The above computer-readable medium may be included in the multi-viewpoint 3D display device described in the above embodiments; or may exist alone without being assembled into the multi-viewpoint 3D display device. The above computer-readable medium carries one or more programs, and when the above one or more programs are executed by the multi-viewpoint 3D display device, the multi-viewpoint 3D display is configured to: control the 3D display screen to display a viewpoint image corresponding to information of a viewpoint at which eyes are located, according to the information of the viewpoint at which eyes of a user are located when determining that the user meets conditions according to face image features of the user.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a ROM, a RAM, a diskette or an optical disk, and may also be a transient storage medium.

The equipment, the devices, the modules or the units illustrated in the above embodiments may be realized by each type of possible entity. A typical realizing entity is the computer or the processor thereof or other components. The computer, for example, may be the personal computer, a laptop computer, vehicle-mounted human-computer interaction equipment, the cell phone, a camera phone, an intelligent phone, the PDA, a media player, navigation equipment, E-mail equipment, a game console, the tablet personal computer, the wearable equipment, the smart television, an Internet of Things (IoT) system, smart home, an industrial computer, a singlechip system or a combination thereof. In a typical configuration, the computer may comprise one or more Central Processing Units (CPUs), an input/output interface, a network interface and a memory. The memory probably comprises a volatile memory, an RAM and/or a nonvolatile memory and other forms in a computer readable medium, such as a Read Only Memory (ROM) or a flash RAM.

The method, the programs, the equipment, the devices and the like in the embodiments of the present disclosure may be executed or realized in one or more networked computers, and may also be implemented in distributed computing environments. In the embodiments of the description, in the distributed computing environments, tasks are executed by remote processing equipment connected by a communication network.

Those skilled in the art should understand that the embodiments of the description may provide the method, the equipment or computer program products. Therefore, the embodiments of the description may adopt forms of full-hardware embodiments, full-software embodiments or embodiments combining software and hardware aspects.

Those skilled in the art may contemplate that the functional modules/units or the controller and related method steps, illustrated in the above embodiments, may be realized in a software manner, a hardware manner and a software/hardware combination manner, and for example, may be realized in a pure computer readable program code manner; and logic programming can also be performed for part or all of the method steps to enable the controller to realize same functions by the hardware, comprising but not limited to a logic gate, a switch, a special integrated circuit, a Programmable Logic Controller (PLC) (such as the FPGA) and an embedded microcontroller.

In some embodiments of the present disclosure, the components of the devices are described in a form of the functional modules/units. It may be contemplated that a plurality of functional modules/units are realized in one or more 'combined' functional modules/units and/or one or more software and/or hardware. It may also be contemplated that the single functional module/unit is realized by the combination of a plurality of sub-functional modules/sub-units and/or multiple software and/or hardware. The division of the functional modules/units may be only a logic function division, and in some realizing manners, the plurality of functional modules/units may be combined or may be integrated into another system. Additionally, the connection of the modules, the units, the devices, the systems and the components thereof in the text comprises direct or indirect connection, covering feasible electrical, mechanical and communication connection, comprising wired or wireless connection between the interfaces of each type, comprising but not limited to a High-Definition Multimedia Interface (HDMI), thunders, the USB, the WiFi and the cellular network.

In the embodiments of the present disclosure, the technical features, the flow charts and/or the block diagrams of the method and the programs may be applied in the corresponding devices, equipment and systems as well as the modules, the units and the components thereof. On the contrary, each embodiment and features of the devices, the equipment, the systems as well as the modules, the units and the components thereof may be applied in the method and the programs according to the embodiments of the present disclosure. For example, a computer program instruction may be loaded in a general-purpose computer, a special computer, an embedded processor or a processor of other programmable data processing equipment to generate a machine which has corresponding functions or features realized in one program or more programs of the flow charts and/or one block or more blocks of the block diagrams.

The method and the programs according to the embodiments of the present disclosure may be stored in a computer readable memory or medium which can guide the computer or other programmable data processing equipment to work in a specific manner by way of the computer program instructions or programs. The embodiments of the present disclosure also relate to the readable memory or medium which stores the method, the programs and the instructions which can implement the embodiments of the present disclosure.

A storage medium comprises permanent and impermanent articles and mobile and immobile articles that may be used for realizing information storage by any method or technology. The information may be modules of a computer readable instruction, a data structure and a program or other data. Examples of the storage medium comprise, but not limited to a Phase-Change Random Access Memory (PRAM), a Static Random Access Memory (SRAM), a Dynamic Random Access Memory (DRAM), other types of RAMs, ROMs, Electrically Erasable Programmable Read-Only Memories (EEPROMs), flash memories or other memory technologies, Compact Disc Read-Only Memories (CD-ROMs) and Digital Video Disks (DVDs) or other optical memories and magnetic cassette tapes, and tape disk storage equipment or other magnetic storage equipment or any other non-transmission medium may be used for storing information which may be accessed by calculating equipment.

Unless clearly pointed out, actions or steps of the method and the programs recorded according to the embodiments of the present disclosure are not necessarily executed according to a specific sequence, and an expected result may still be realized. In some implementation manners, multitasking and parallel processing are also permissible or are probably favorable.

In the text, multiple embodiments of the present disclosure are described, but for simplicity, the description for each embodiment is not elaborate, and same and similar features or parts between the embodiments are probably neglected. In the text, "an embodiment", "some embodiments", "examples", or "some examples" refer to being suitable for at least one embodiment or example according to the present disclosure, rather than all the embodiments. The above terms are not necessarily meant to refer to the same embodiment or example. In addition, the features, structures, materials or characteristics of each embodiment may be combined in a proper manner in any one or more embodiments or examples. Additionally, under the condition of no mutual contradiction, those skilled in the art may combine and integrate different embodiments or examples and the features of the different embodiments or examples, which are described in the description.

The exemplary system and method of the present disclosure are shown and described with reference to the above embodiments, and are only optimal modes of examples for implementing the system and the method. Those skilled in the art may understand that when the system and/or the method is implemented, each change may be made to the embodiments of the system and the method described here, without departing from the spirit and the scope, defined in the attached claims, of the present disclosure. The attached claims are intended to define the scope of the system and the method, and therefore, the system and the method, falling in the claims and being equivalent thereto, may be covered. The above illustration for the system and the method should be understood to comprise all combinations of new and non-obvious elements described here, while the claims relating to any combination of the new and non-obvious elements may exist in the present application or the follow-up application. Additionally, the above embodiments are exemplary, and in all possible combinations that may be claimed in the present application or the follow-up application, no single feature or element is essential.

## Claims

1. A display control method for a multi-viewpoint 3D display screen, comprising:
acquiring identity features of a user;
performing 3D display for the user when the identity features meet conditions.

2. The display control method according to claim 1, wherein the multi-viewpoint 3D display screen comprises a plurality of composite pixels; each composite pixel of the plurality of composite pixels comprises a plurality of composite subpixels; each composite subpixel of the plurality of composite subpixels comprises a plurality of subpixels corresponding to a plurality of viewpoints of the multi-viewpoint 3D display screen;
performing 3D display for the user comprises:
rendering subpixels, corresponding to the viewpoints, in the plurality of composite subpixels in the multi-viewpoint 3D display screen based on 3D signals according to viewpoints at which eyes of the user are located.

3. The display control method according to claim 1, wherein cases that the identity features meet conditions comprise:
acquiring face image features of the user, and determining that the identity features meet conditions when face image features of the user are matched with authorized face image features; or
acquiring face image features and interpupillary distance features of the user, and determining that the identity features meet conditions, when face image features of the user are matched with authorized face image features and interpupillary distance features of the user are matched with authorized interpupillary distance features; or
acquiring face image features of the user, and determining that the identity features meet conditions, when face image features of the user are matched with authorized face image features and a number of the user whose face image features are matched with authorized face image features meets preset numerical conditions; or
acquiring face image features and interpupillary distance features of the user, and determining that the identity features meet conditions, when face image features of the user are matched with authorized face image features, interpupillary distance features of the user are matched with authorized interpupillary distance features, and a number of the user whose face image features are matched with authorized face image features and whose interpupillary distance features are matched with authorized interpupillary distance features meets preset numerical conditions.

4. The display control method according to claim 3, wherein face image features of the user are matched with authorized face image features comprises:
acquiring played 3D images;
acquiring the authorized face image features according to the 3D images;
comparing face image features of the user with the authorized face image features;
determining that face image features of the user are matched with the authorized face image features when a comparison result is that face image features of the user are consistent with the authorized face image features.

5. The display control method according to any one of claims 1-4, further comprising:
stopping performing 3D display for the user when the identity features do not meet conditions.

6. The display control method according to any one of claims 1-4, further comprising:
collecting a face image of the user;
acquiring viewpoints, at which eyes of the user are located, based on the face image;
performing 3D display based on the viewpoints.

7. The display control method according to any one of claims 1-4, further comprising:
acquiring positions of eyes of the user in a face when the identity features meet conditions, and acquiring viewpoints, at which eyes of the user are located, according to a face image position of the user and positions of the eyes in the face; or
acquiring a correspondence between both eyes of the user and viewpoints when the identity features meet conditions, and acquiring, according to a viewpoint at which one of both eyes of the user is located and a correspondence between the both eyes and viewpoints, a viewpoint at which the other eye of both eyes of the user is located.

8. The display control method according to any one of claims 1-4, further comprising:
acquiring eye positioning data of the user when the identity features meet conditions;
acquiring viewpoints, at which eyes of the user are located, based on the eye positioning data.

9. A multi-viewpoint 3D display device, comprising:
a multi-viewpoint 3D display screen;
a 3D processing apparatus, configured to acquire identity features of a user, and trigger the multi-viewpoint 3D display screen to perform display 3D for the user when the identity features meet conditions.

10. The multi-viewpoint 3D display device according to claim 9, wherein the multi-viewpoint 3D display screen comprises a plurality of composite pixels; each composite pixel of the plurality of composite pixels comprises a plurality of composite subpixels; each composite subpixel of the plurality of composite subpixels comprises a plurality of subpixels corresponding to a plurality of viewpoints of the multi-viewpoint 3D display screen;
the 3D processing apparatus is configured to render subpixels, corresponding to the viewpoints, in the plurality of composite subpixels in the multi-viewpoint 3D display screen based on 3D signals according to viewpoints at which eyes of the user are located.

11. The multi-viewpoint 3D display device according to claim 9, wherein the 3D processing apparatus is configured to:
acquire face image features of the user, and determine that the identity features meet conditions when face image features of the user are matched with authorized face image features; or
acquire face image features and interpupillary distance features of the user, and determine that the identity features meet conditions, when face image features of the user are matched with authorized face image features and interpupillary distance features of the user are matched with authorized interpupillary distance features; or
acquire face image features of the user, and determine that the identity features meet conditions, when face image features of the user are matched with authorized face image features and a number of the user whose face image features are matched with authorized face image features meets preset numerical conditions; or
acquire face image features and interpupillary distance features of the user, and determine that the identity features meet conditions, when face image features of the user are matched with authorized face image features, interpupillary distance features of the user are matched with authorized interpupillary distance features, and a number of the user whose face image features are matched with authorized face image features and whose interpupillary distance features are matched with authorized interpupillary distance features meets preset numerical conditions.

12. The multi-viewpoint 3D display device according to claim 11, wherein the 3D processing apparatus is configured to acquire played 3D images, acquire the authorized face image features according to the 3D images, compare face image features of the user with the authorized face image features, and determine that face image features of the user are matched with the authorized face image features when a comparison result is that face image features of the user are consistent with the authorized face image features.

13. The multi-viewpoint 3D display device according to any one of claims 9-12, wherein the 3D processing apparatus is configured to control the multi-viewpoint 3D display screen to stop displaying viewpoint images corresponding to viewpoints at which the eyes are located according to viewpoints at which eyes of the user are located when the identity features do not meet conditions.

14. The multi-viewpoint 3D display device according to any one of claims 9-12, further comprising:
an image collection apparatus, configured to collect a face image of the user;
the 3D processing apparatus is configured to acquire viewpoints, at which eyes of the user are located, based on the face image, and trigger the multi-viewpoint 3D display screen to perform 3D display for the user based on the viewpoints.

15. The multi-viewpoint 3D display device according to any one of claims 9-12, wherein the 3D processing apparatus is configured to:
acquire positions of eyes of the user in a face when the identity features meet conditions, and acquire viewpoints, at which eyes of the user are located, according to a face image position of the user and positions of eyes in a face; or
acquire a correspondence between both eyes of the user and viewpoints when the identity features meet conditions, and acquire, according to a viewpoint at which one of both eyes of the user is located and a correspondence between the both eyes and viewpoints, a viewpoint at which the other eye of both eyes of the user is located.

16. The multi-viewpoint 3D display device according to any one of claims 9-12, further comprising:
an eye positioning apparatus, configured to acquire eye positioning data of the user when the identity features meet conditions;
the 3D processing apparatus is configured to acquire viewpoints, at which eyes of the user are located, based on the eye positioning data.

17. A multi-viewpoint 3D display device, comprising:
a processor; and
a memory storing program instructions;
wherein the processor is configured to execute the method of any one of claims 1-8 when executing the program instructions.

18. A computer-readable storage medium, storing computer-executable instructions, wherein the computer-executable instructions are configured to execute the method of any one of claims 1-8.

19. A computer program product, comprising computer programs stored on a computer-readable storage medium, wherein the computer programs comprise program instructions, and make a computer execute the method of any one of claims 1-8 when the program instructions are executed by the computer.
